# EUROPÄISCHE PATENTSCHRIFT

(11) **EP 2 646 263 B1**
(45) Veröffentlichungstag und Bekanntmachung des Hinweises auf die Patenterteilung: **02.03.2016**
(21) Anmeldenummer: 11773730.4
(22) Anmeldetag: 24.10.2011
(51) Int. Cl.: B60C 11/03, B60C 11/12

(54) **FAHRZEUGLUFTREIFEN**
VEHICLE PNEUMATIC TIRE
PNEU DE VEHICULE

(30) Priorität: 01.12.2010 DE 102010060946
(43) Veröffentlichungstag der Anmeldung: 09.10.2013
(73) Patentinhaber: Continental Reifen Deutschland GmbH, 30165 Hannover (DE)
(72) Erfinder: DIENSTHUBER, Franz, 30559 Hannover (DE); VERMEHR, Ulrich, 30163 Hannover (DE)
(74) Vertreter: Preusser, Andrea
(86) Internationale Anmeldenummer: PCT/EP2011/068503
(87) Internationale Veröffentlichungsnummer: WO 2012/072337

(56) Entgegenhaltungen:
- WO-A1-2010/000797
- WO-A1-2010/063558
- JP-A- 2003 182 314
- JP-A- 2006 168 501
- JP-A- 2007 186 053
- JP-A- 2009 126 293

## Beschreibung

Die Erfindung betrifft einen Fahrzeugluftreifen, insbesondere für den Einsatz unter winterlichen Fahrbedingungen, mit einem Laufstreifen, welcher Laufstreifen schulterseitig Profilblockreihen aufweist, welche durch in Umfangsrichtung umlaufende Umfangsrillen von einem zentralen Laufstreifenbereich getrennt sind, in welchem weitere Rillen - Diagonalrillen, Umfangsrillen, Querrillen und dergleichen - Profilblöcke oder sonstige Profilpositive bilden, wobei die Profilblöcke bzw. Profilpositive jeweils mit einer Anzahl von zumindest im Wesentlichen in Laufstreifenquerrichtung verlaufenden Einschnitten einer Breite von 0,4 mm bis 0,6 mm versehen sind, welche die Schulterblöcke und die Profilblöcke oder sonstigen Profilpositive in Blockelemente gliedern, zur Profiloberfläche Griffkanten bilden und zumindest abschnittsweise in Draufsicht gerade oder im Wesentlichen gerade verlaufen und in diesen Abschnitten von in radialer Richtung verlaufenden ebenen Einschnittwänden begrenzt sind, wobei Einschnitte vorgesehen sind, welche an der einen in radialer Richtung verlaufenden ebenen Einschnittwand eines in Draufsicht gerade verlaufenden Abschnittes einen einzigen Vorsprung mit einer am Vorsprung ausgebildeten weiteren Griffkante aufweisen, deren Abstand von der Profiloberfläche - bei neuem Reifen - zwischen 1 mm und 2 mm beträgt.

Ein Fahrzeugluftreifen der eingangs genannten Art ist aus der JP 2006 168501 A bekannt. Der Laufstreifen weist Profilblocke mit in Draufsicht gerade verlaufenden Einschnitten auf. An der einen Einschnittwand ist jeweils knapp innerhalb der Blockoberfläche und parallel zur Blockoberfläche verlaufend ein einzelner Vorsprung ausgebildet. Aus der DE 10 2005 042 569 A1 sind ferner Ausführungsvarianten von Laufstreifen bekannt, welche durch Quernuten, Umfangsrillen und Diagonalrillen in Profilpositive gegliedert sind, die jeweils mit einer, Vielzahl von Einschnitten versehen sind. Ein Teil der Einschnitte sind Standardeinschnitte mit einer Breite von bis zu 0,8 mm, ein Teil der Einschnitt sind Mikroeinschnitte, welche eine Breite zwischen 0,1 mm und 0,3 mm aufweisen. Durch die Kombination dieser Einschnitte sollen die Griffeigenschaften auf winterlichen Fahrbahnen, insbesondere auf Schnee und Eis, verbessert werden. Weitere Ausführungsformen von Laufstreifen mit zumindest abschnittsweise zickzack- oder wellenförmig verlaufenden Einschnitten sind aus der EP-B 0 715 972, der DE-A 197 05 156 und der EP-B-0 729 854 bekannt. Die Einschnitte in den Profilpositiven des Laufstreifens sind für einen guten Wintergriff, insbesondere auf Schnee, unerlässlich. Die Einschnitte öffnen sich unter der Wirkung von Umfangskräften im Latschdurchgang, beispielsweise beim Beschleunigen, und bilden dadurch Griffkanten, die sich im komprimierten Schnee abstützen können und so eine Kraftübertragung ermöglichen. Die Wirksamkeit des Kanteneffektes der Einschnitte wird maßgeblich durch den Winkel der Oberflächen der Blockelemente zum Boden bestimmt. Bei einem Neureifen mit noch großer Profiltiefe ist aufgrund des langen Hebelarms der einzelnen von den Einschnitten gebildeten Blockelemente der optimale Betrag des Winkels in der Regel überschritten. Des Weiteren haben Maßnahmen zur Unterstützung des Beschleunigens auf winterlichen Fahrbahnen oft negative Auswirkungen auf das Abbremsen unter diesen Fahrbedingungen.

Der Erfindung liegt die Aufgabe zugrunde, die Kanteneffekte bei neuem Reifen sowohl beim Beschleunigen als auch beim Abbremsen zu verbessern bzw. insgesamt auf ein höheres Niveau zu bringen.

Gelöst wird die gestellte Aufgabe erfindungsgemäß dadurch, dass der Laufstreifen laufrichtungsgebunden ausgeführt ist, wobei in den schulterseitigen Profilblöcken die weiteren Griffkanten an Einschnittwänden angeordnet sind, die an auslaufende Kanten der Blockelemente anschließen, und wobei in Profilpositiven im zentralen Laufstreifenbereich die weiteren Griffkanten an Einschnittwänden angeordnet sind, die an einlaufende Kanten der Profilpositivelemente anschließen.

In gemäß der Erfindung ausgeführten Laufstreifen werden in Einschnitten zweite Griffkanten knapp unterhalb der Profiloberfläche angeordnet. Diese Maßnahme ist vor allem bei neuen Reifen von Vorteil, da Umfangskräfte, wie sie beim Beschleunigen und Bremsen auftreten, eine derartige Verformung der Blockelemente bewirken, dass die zweiten Griffkanten neben den vorhandenen Griffkanten mit dem Untergrund in Kontakt treten und dadurch den Kanteneffekt des Profils verstärken, was vor allem auf Schnee sehr wirksam ist. Die weiteren Griffkanten im mittleren Laufstreifenbereich können ihre Wirkung vor allem bei Traktion entfalten, die weiteren Griffkanten in den schulterseitigen Profilblöcken beim Bremsen.

Dabei ist es ausreichend, dass der Abstand der weiteren Griffkante von der jeweiligen Einschnittwand zwischen 0,1 mm und 0,2 mm beträgt.

Die Vorsprünge mit den weiteren Griffkanten sollten sich ferner in Einschnitten oder Einschnittabschnitten befinden, welche zumindest bis in eine Tiefe von 70 % der Profiltiefe reichen. Gerade bei solchen Einschnitten und Einschnittabschnitten weisen die einzelnen Profilblockelemente jene Beweglichkeit auf, die ein Wirksamwerden der weiteren Griffkanten bei Belastung gewährleisten. Weitere Merkmale, Vorteile und Einzelheiten der Erfindung werden anhand der schematischen Zeichnung, die ein Ausführungsbeispiel der Erfindung darstellt, näher beschrieben. Dabei zeigen,
Fig. 1 eine Draufsicht auf einen Abschnitt der Abwicklung eines Laufstreifens eines Fahrzeugluftreifens,
Fig. 2 eine Ansicht entlang eines Einschnittes aufgeschnittenen schulterseitigen Profilblock, in der durch die beiden Pfeile C in Fig. 1 gekennzeichneten Ansicht,
Fig. 3 eine Schnittdarstellung entlang der Linie III-III der Fig. 2,
Fig. 4 einen zu Fig. 3 analogen Schnitt, jedoch unter Krafteinwirkung und
Fig. 5 einen entlang eines Einschnittes aufgeschnittenen Profilblock aus dem zentralen Bereich des Laufstreifens, in der durch die Pfeile D in Fig. 1 gekennzeichneten Ansicht.

Der in der Figur dargestellte Laufstreifen ist für einen Fahrzeugluftreifen für Personenkraftwagen vorgesehen und für einen Einsatz unter winterlichen Fahrbedingungen besonders geeignet. Mit A-A ist der Reifenäquator, mit B die Breite des Boden berührenden Teils des Laufstreifen (unter Nenndruck und Nennlast gemäß E.T.R.T.O Standards) bezeichnet. Der Laufstreifen weist ein laufrichtungsgebunden ausgeführte Laufstreifenprofil mit in den beiden Laufstreifenhälften übereinstimmend ausgeführten Profilstrukturen auf, wobei die in der einen Laufstreifenhälfte vorgesehenen Profilstrukturen gegenüber jenen, die in der anderen Laufstreifenhälfte vorgesehen sind, in Umfangsrichtung geringfügig versetzt sind. Das Laufstreifenprofil weist einen zentralen Profilbereich Z auf, auf dessen Ausgestaltung noch näher eingegangen wird und welcher zwischen 45 % und 55 % der Laufstreifenbreite B einnimmt. Der zentrale Bereich Z ist jeweils durch eine breite, in Umfangsrichtung umlaufende Umfangsrille 1 von je einer Schulterblockreihe 2 getrennt. Die Profilblöcke 3 in jeder Schulterblockreihe 2 sind in Umfangsrichtung voneinander durch Quernuten 4 getrennt, welche bei der gezeigten Ausführungsform gerade verlaufen und mit der Umfangsrichtung einen Winkel α einschließen, welcher insbesondere zwischen 65° und 85° gewählt wird, wobei in Folge der laufrichtungsgebundenen Ausführung des Laufstreifens die Quernuten 4 in der einen Schulterblockreihe 2 gegenüber den Quernuten 4 in der zweiten Schulterblockreihe 2 gegensinnig geneigt sind. Die Neigung ist ferner derart, dass die laufstreifeninnenseitig gelegenen Enden der Quernuten 4 beim Abrollen des Reifens zuerst in die Kontaktfläche mit dem Untergrund einlaufen. Im zentralen Bereich Z des Laufstreifens, sind als Hauptrillen Diagonalrillen 5 vorgesehen. Jede Diagonalrille 5 verläuft jenseits der jeweiligen Umfangsrille 1 etwa in Verlängerung einer Quernut 4 aus einer Schulterblockreihe 2 in Richtung Reifenäquator A-A, und geringfügig über den Reifenäquator A-A hinaus. Die in der einen Laufstreifenhälfte verlaufenden Diagonalrillen 5 sind daher gegenüber jenen, die in der anderen Laufstreifenhälfte verlaufen, analog zu den Quernuten 4 gegensinnig geneigt, sodass sich insgesamt eine gepfeilte Anordnung der Querrillen 4 und der Diagonalrillen 5 ergibt.

Jede Diagonalrille 5 weist zwei unter einem stumpfen Winkel γ zueinander verlaufende Rillenabschnitte 5a, 5b auf, wobei γ in der Größenordnung von 140° bis 160° beträgt. Die an die Umfangsrillen 1 anschließenden Rillenabschnitte 5a verlaufen unter einem Winkel β₁ zur Umfangsrichtung, welcher zwischen 45° und 65° beträgt, die geringfügig über den Reifenäquator A-A verlaufenden Rillenabschnitte 5b schließen einen spitzen Winkel β₂, welcher kleiner ist als β₁ und in der Größenordnung von 20° bis 40° beträgt, mit Umfangsrichtung bzw. dem Reifenäquator A-A ein. An ihren laufstreifeninnenseitigen Ende weisen die Diagonalrillen 5 ihre geringste Breite auf, wobei ihre Breite von diesen Enden ausgehend bis zur jeweiligen Umfangsrille 1 kontinuierlich größer wird. Zusätzliche Rillen 6 gliedern den zentralen Bereich in Profilblöcke 7a und profilblockartige Profilelemente 7b. Die zusätzlichen Rillen 6 verbinden jeweils zwei einander benachbart verlaufende Diagonalrillen 5 und verlaufen jeweils vom vorspringenden Knick einer Diagonalrille 5 zum Rillenabschnitt 5b der benachbarten Diagonalrille 5 unter einem Winkel δ von 20° bis 40° und gegensinnig zu den Diagonalrillen 5. Die Rillen 6 sind schmäler als die Diagonalrillen 5, ihre Tiefe ist geringer als die Tiefe der Umfangsrillen 1 bzw. der Diagonalrillen 5. Am Rillengrund der Rillen 6 kann ein schmaler Einschnitt 8 vorgesehen sein, welcher in einer Breite von 0,4 mm bis 1,0 mm ausgeführt ist und bis auf die vorgesehene Profiltiefe - dies ist die Tiefe der Umfangsrillen 1 - reichen kann.

Die schulterseitig angeordneten Profilblöcke 3 sind in ihrem mittleren Bereich durch in konstanter Breite ausgeführte zusätzliche Querrillen 9 zweigeteilt, welche parallel zu den Quernuten 4 verlaufen und in die Umfangrille 1 einmünden. Auch die zusätzlichen Querrillen 9 weisen eine geringere Tiefe auf als die Umfangsrillen 1 und können mittig mit einem schmalen, etwa 0,4 mm bis 0,6 mm breiten Einschnitt 10 versehen sein, welcher sich jeweils bevorzugt über die gesamte Länge der Querrille 9 erstreckt und eine Tiefe von 1 mm bis 3 mm aufweist.

Sämtliche Profilpositive sind jeweils mit einer Anzahl von Einschnitten 11, 12 versehen, deren Breite zwischen 0,4 mm und 0,6 mm beträgt. In den Schulterblöcken 3 ist zumindest je ein Einschnitt 11 im Schulterblockteil zwischen der zusätzlichen Querrille 9 und der Quernut 4 vorgesehen, je nach Umfangslänge der Schulterblöcke 3 sind in den Schulterblockteilen auch zwei Einschnitte 11 vorgesehen. Die Einschnitte 11 erstrecken sich parallel zu den Quernuten 4 und weisen zwei in Draufsicht gerade verlaufende Einschnittabschnitte 11a und eine zwischen diesen verlaufenden mittleren Abschnitt 11b auf, welcher in Draufsicht eine Wellen- bzw. Zickzackform aufweist. Die wellenförmigen Abschnitte 11b tragen dazu bei, dass sich die Profilblöcke 3 in den Schulterblockreihen 2 bei Querkräften versteifen können.

Im zentralen Bereich Z des Laufstreifens sind bei der gezeigten Ausführungsform in Draufsicht gerade verlaufende Einschnitte 12 angeordnet. Die Einschnitte 12 können in Laufstreifenquerrichtung verlaufen oder es können, wie dargestellt, die auf der eine Seite des Reifenäquators A-A verlaufenden Einschnitte 12 gegenüber jenen, die an der anderen Seite des Reifenäquators A-A verlaufen, gegensinnig geneigt sein und auch jeweils gegensinnig zu den dort angeordneten Diagonalrillen 5 geneigt sein. Der Neigungswinkel ϕ der Einschnitte 12 zur Umfangsrichtung (Reifenäquator A-A) beträgt zwischen 90° und 120°. Beim Reifenäquator A-A verlaufen einige Einschnitte 12 aus der einen Laufstreifenhälfte geringfügig über den Reifenäquator A-A hinaus und enden bei der nächsten Diagonalrille 5. Pro Profilblock 7a bzw. blockartigem Profilelement 7b sind zwischen 5 und 7 Einschnitte 12 vorgesehen, deren gegenseitiger Abstand etwa 4,5 mm bis 6,5 mm beträgt. Die geraden und zumindest im Wesentlichen in Laufstreifenrichtung verlaufenden Einschnitte 12 im zentralen Bereich Z des Laufstreifens unterstützen eine gute Kraftübertragung auf Schnee. Beim Wirken von Umfangskräften können sich die geraden Einschnitte 12 sehr gut öffnen und mit Schnee befüllen, sodass die derart verstärkte Schnee-Schnee-Reibung das gesamte Griffpotential des Laufstreifens bzw. Reifens auf schneeigem Untergrund deutlich erhöht.

Wie bereits erwähnt wird der Fahrzeugluftreifen derart am Fahrzeug montiert, dass die laufstreifeninnenseitigen Enden der Diagonalrillen 5 und der Quernuten 4 beim Abrollen des Reifens - bei Vorwärtsfahrt - zuerst in den Untergrund eintreten. Die Einschnitte 11 gliedern die Schulterblöcke 3 in Blockelemente 3a, die Einschnitte 12 die Profilblöcke 7a und die Profilpositive 7b in Blockelemente 17a und 17b. Bezüglich der Abrollrichtung des Reifens bei Vorwärtsfahrt weist jedes Blockelement 3a, 17a und 17b eine sogenannte einlaufende Kante 14a, 15a auf, mit welcher das jeweilige Blockelement 3a, 17a und 17b im Wesentlichen zuerst in den Untergrund eintritt, gegenüber dieser befindet sich die sogenannte auslaufende Kante 14b, 15b. Einlaufende Kanten 14a, 15a und auslaufende Kanten 14b, 15b sind auch dort vorhanden, wo die Blockelemente 3a, 17a und 17b voneinander durch die Einschnitte 11 bzw. 12 getrennt sind.

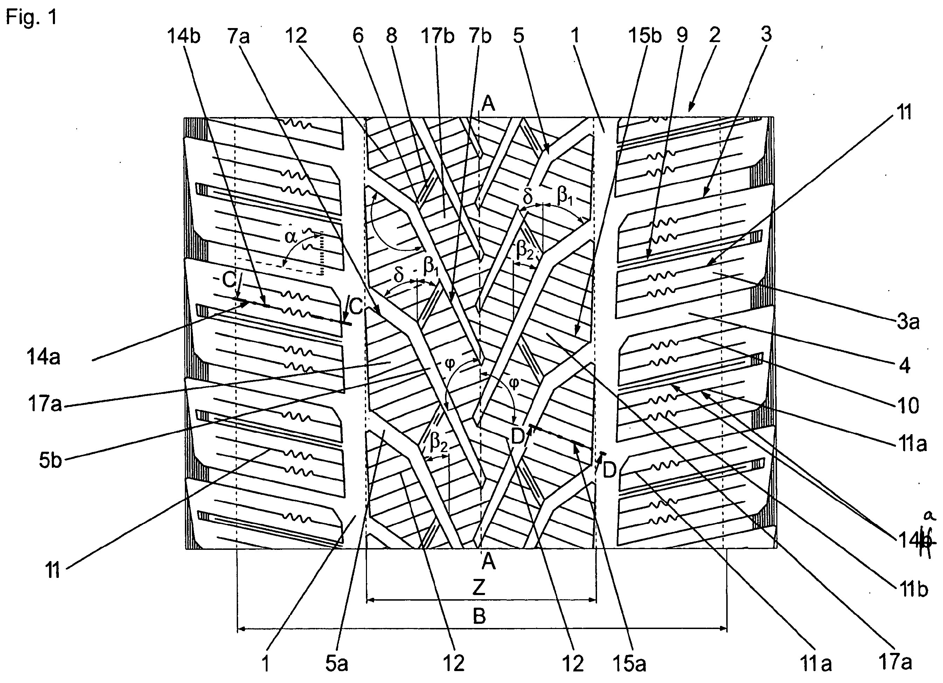

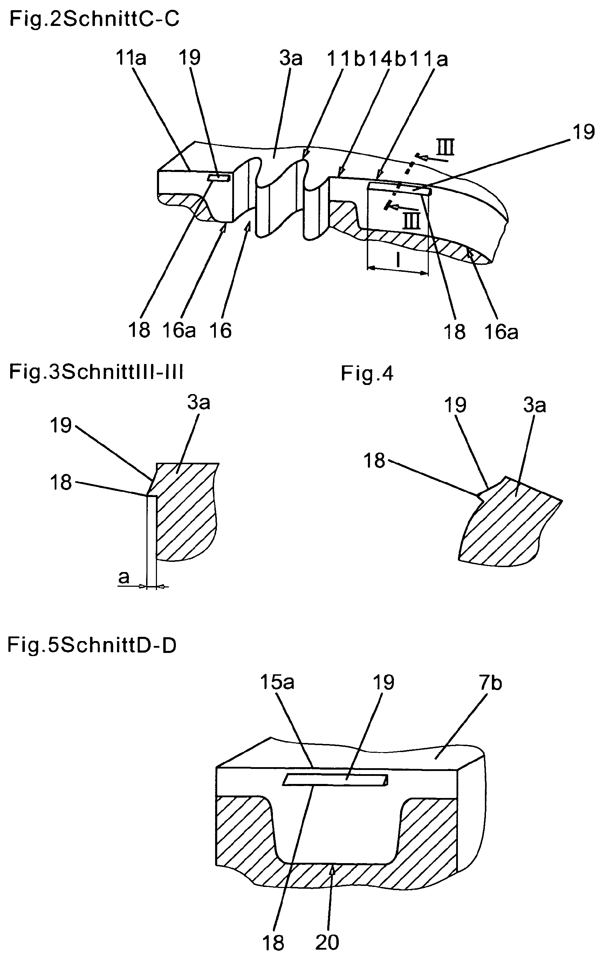

Fig. 2 zeigt eine Ansicht gemäß den Pfeilen C in Fig. 1 und somit eine Einschnittwand 16 eines Einschnittes 11 in einem der Schulterblöcke 3, wobei diese Einschnittwand 16 an die auslaufende Kante 14b des gezeigten Blockelementes 3a anschließt. Zu sehen sind die Wellenform des mittleren Abschnittes 11b des Einschnittes und zumindest teilweise die an diesen anschließenden geraden Abschnitte 11a, hier sind die Einschnittwandabschnitte in radialer Richtung verlaufende ebene Flächen. Der mittlere Abschnitt 11b und Teile der seitlichen Abschnitte 11a sind tief, auf mindestens 70% der Profiltiefe reichend, ausgeführt. An den tiefen Einschnittwandabschnitten 16a der seitlichen Abschnitte 11a befindet sich in einem Abstand von 1 mm bis 2 mm von der auslaufenden Kante 14b und parallel zu dieser verlaufend jeweils eine zweite Griffkante 18. Die Griffkante 18 ist eine spitze vorspringende Kante an einem im Querschnitt etwa dreieckigen bzw. nasenartigen Vorsprung 19 der Einschnittwand 16. Der Abstand a der an diesem Vorsprung 19 gebildeten Griffkante 18 von der Einschnittwand 16 beträgt zwischen 0,1 mm und 0,2 mm, insbesondere 0,15 mm. Die Länge 1 der zusätzlichen Griffkante 18 kann nahezu bzw. im Wesentlichen der axialen Länge der Abschnitte 16a entsprechen, die Länge 1 kann jedoch auch etwas kürzer sein und wird im Allgemeinen mindestens einige Millimeter betragen. In jedem Fall werden die zusätzliche Griffkanten 18 an Einschnittwänden von in tiefen Einschnittabschnitten, die bis mindestens 70 % der Profiltiefe reichen, vorgesehen.

Fig. 4 zeigt die Verformung des Blockelementes 3a unter Wirkung einer Kraft in Richtung des Pfeiles in Fig. 4, wie sie beispielsweise beim Bremsen auftritt. Durch die Verformung des betreffenden Blockelementes 3a gelangt die zweite Griffkante 18 soweit nach außen, dass sie ihre Wirkung als zusätzliche Griffkante 18 entfalten kann.

Fig. 5 zeigt eine Ansicht einer Einschnittwand 20 eines Einschnittes 12 im zentralen Bereich Z des Laufstreifens, wobei diese Einschnittwand 20 an eine einlaufende Kante 15a eines Blockelementes 17a anschließt. Der Einschnitt 12 ist ein in Draufsicht gerader Einschnitt, mit einem mittleren tiefen Abschnitt und seitlichen Abschnitten geringerer Tiefe und ist durch zwei in radialer Richtung verlaufende ebene Einschnittwände 20 begrenzt. An der gezeigten Einschnittwand 20 befindet sich über einen Großteil der axialen Erstreckung des mittleren tiefen Abschnittes, parallel zur Kante 15a, eine analog zur bereits beschriebenen Ausführungsform gestaltete und angeordnete zweite Griffkante 18 an einem Vorsprung 19. Diese zweite, zusätzliche Griffkante 18 in Einschnitten 12 im zentralen Bereich Z des Laufstreifens entfaltet ihre Wirkung vor allem bei Traktion und der damit einhergehenden Verformung des betreffenden Blockelementes 17b.

Bevorzugt werden in möglichst vielen bzw. in sämtlichen Einschnitten 11 und 12 an den entsprechenden ein- und auslaufenden Kanten 14a, 14b, 15a, 15b, wie beschrieben, zusätzliche Griffkanten 18 an den Einschnittwänden angeordnet.

Die Erfindung ist auf das dargestellte und beschriebene Ausführungsbeispiel nicht eingeschränkt. Gemäß der Erfindung angeordnete und ausgebildete zusätzliche Griffkanten sind vor allem bei solchen Einschnitten oder Einschnittabschnitten von Vorteil, welche zumindest im Wesentlichen in Laufstreifenquerrichtung und in Draufsicht gerade verlaufende und ebene Einschnittwände aufweisen. Besonders vorteilhaft ist die Erfindung bei einem laufrichtungsgebunden ausgeführten Reifen, insbesondere durch die Möglichkeit der funktionalen Trennung durch die Anordnung der zweiten Griffkante bei den einlaufenden Kanten im zentralen Bereich und bei den auslaufenden Kanten in den Schulterbereichen.

Die Erfindung ist selbstverständlich auch bei Laufstreifenprofilen einsetzbar, deren Einschnitte einen beliebigen Verlauf aufwiesen, unabhängig von der Position der Einschnitte im Laufstreifen - ob schulterseitig oder mittig - und daher auf beliebige Weise zickzack- oder wellenförmige oder gerade Abschnitte aufweisen können. Das Laufstreifenprofil selbst kann mehr als zwei Umfangsrillen aufweisen und in beliebiger Weise mit Profilblockreihen, Profilrippen und dergleichen versehen sein.

### Bezugsziffernliste

- 1: Umfangsrille
- 2: Schulterblockreihe
- 3: Profilblock
- 3a: Blockelement
- 4: Quernuten
- 5: Diagonalrille
- 5a: Rillenabschnitt
- 5b: Rillenabschnitt
- 6: zusätzliche Rille
- 7a: Profilblock
- 7b: blockartiges Profilpositiv
- 8: Einschnitt
- 9: zusätzliche Querrille
- 10: Einschnitt
- 11: Einschnitt
- 11a: Einschnittabschnitt
- 11b: Einschnittabschnitt
- 12: Einschnitt
- 14a: einlaufende Kante
- 14b: auslaufende Kante
- 15a: einlaufende Kante
- 15b: auslaufende Kante
- 16: Einschnittwand
- 16a: Einschnittwandabschnitt
- 17a: Blockelement
- 17b: Blockelement

## Patentansprüche

1. Fahrzeugluftreifen, insbesondere für den Einsatz unter winterlichen Fahrbedingungen, mit einem Laufstreifen, welcher Laufstreifen schulterseitig Profilblockreihen aufweist, welche durch in Umfangsrichtung umlaufende Umfangsrillen (1) von einem zentralen Laufstreifenbereich (Z) getrennt sind, in welchem weitere Rillen - Diagonalrillen (5), Umfangsrillen (1), Querrillen (4) und dergleichen - Profilblöcke (3, 7a) oder sonstige Profilpositive (7b) bilden, wobei die Profilblöcke (3, 7a) bzw. Profilpositive (7b) jeweils mit einer Anzahl von zumindest im Wesentlichen in Laufstreifenquerrichtung verlaufenden Einschnitten (11, 12) einer Breite von 0,4 mm bis 0,6 mm versehen sind, welche die Schulterblöcke (3) und die Profilblöcke (3, 7a) oder sonstigen Profilpositive (7b) in Blockelemente (3a, 17a, 17b) gliedern, zur Profiloberfläche Griffkanten bilden und zumindest abschnittsweise in Draufsicht gerade oder im Wesentlichen gerade verlaufen und in diesen Abschnitten von in radialer Richtung verlaufenden ebenen Einschnittwänden (16, 20) begrenzt sind, wobei Einschnitte (11, 12) vorgesehen sind, welche an der einen in radialer Richtung verlaufenden ebenen Einschnittwand (16, 20) eines in Draufsicht gerade verlaufenden Abschnittes einen einzigen Vorsprung (19) mit einer am Vorsprung (19) ausgebildeten weiteren Griffkante (18) aufweisen, deren Abstand von der Profiloberfläche - bei neuem Reifenzwischen 1 mm und 2 mm beträgt,
**dadurch gekennzeichnet,**
**dass** der Laufstreifen laufrichtungsgebunden ausgeführt ist, wobei in den schulterseitigen Profilblöcken (3) die Vorsprünge (19) an Einschnittwänden (16) angeordnet sind, die an auslaufende Kanten (14b) der Blockelemente (3a) anschließen, und wobei in Profilpositiven (7a, 7b) im zentralen Laufstreifenbereich (Z) die Vorsprünge (19) an Einschnittwänden (20) angeordnet sind, die an einlaufende Kanten (15a) der Profilpositivelemente (17a, 17b) anschließen.

2. Fahrzeugluftreifen nach Anspruch 1, **dadurch gekennzeichnet, dass** der Abstand der weiteren Griffkante (18) von der Einschnittwand (16, 20) zwischen 0,1 mm und 0,2 mm beträgt.

3. Fahrzeugluftreifen nach Anspruch 1 oder 2, **dadurch gekennzeichnet, dass** die Vorsprünge (19) in Einschnitten (11, 12) bzw. Einschnittabschnitten vorgesehen sind, welche zumindest bis in eine Tiefe von 70 % der Profiltiefe reichen.

## Claims

1. Pneumatic vehicle tyre, in particular for use in winter driving conditions, with a tread strip, which tread strip has rows of profile blocks on the shoulder side, which are separated by circumferential channels (1), running around in the circumferential direction, from a central tread strip region (Z), in which further channels - diagonal channels (5), circumferential channels (1), transverse channels (4) and the like - form profile blocks (3, 7a) or other profile positives (7b), wherein the profile blocks (3, 7a) or profile positives (7b) are respectively provided with a number of sipes (11, 12), that run at least substantially in the transverse direction of the tread strip, have a width of 0.4 mm to 0.6 mm and divide the shoulder blocks (3) and the profile blocks (3, 7a) or other profile positives (7b) into block elements (3a, 17a, 17b), form gripping edges with respect to the profile surface and at least in some portions run straight or substantially straight in plan view and in these portions are bounded by planar sipe walls (16, 20) running in a radial direction, wherein there are sipes (11, 12) which have on the one planar sipe wall (16, 20), running in a radial direction, of a portion running straight in plan view a single projection (19) with a further gripping edge (18) that is formed on the projection (19) and the distance of which from the profile surface - in the case of a new tyre - is between 1 mm and 2 mm,
**characterized**
**in that** the tread strip is of a directional configuration, wherein, in the profile blocks (3) on the shoulder side, the projections (19) are arranged on sipe walls (16) that adjoin running-out edges (14b) of the block elements (3a), and wherein, in profile positives (7a, 7b) in the central tread strip region (Z), the projections (19) are arranged on sipe walls (20) that adjoin running-in edges (15a) of the profile positive elements (17a, 17b).

2. Pneumatic vehicle tyre according to Claim 1, **characterized in that** the distance of the further gripping edge (18) from the sipe wall (16, 20) is between 0.1 mm and 0.2 mm.

3. Pneumatic vehicle tyre according to Claim 1 or 2, **characterized in that** the projections (19) are provided in sipes (11, 12) or sipe portions that reach down to a depth of at least 70% of the profile depth.

## Revendications

1. Pneu de véhicule, en particulier pour l'utilisation dans des conditions de conduite hivernales, comprenant une bande de roulement, laquelle bande de roulement présente du côté de l'épaulement des rangées de blocs profilés qui sont séparées d'une région de bande de roulement centrale (Z) par des rainures périphériques (1) s'étendant sur tout le pourtour dans la direction périphérique, dans laquelle des rainures supplémentaires - rainures diagonales (5), rainures périphériques (1), rainures transversales (4) et similaires - forment des blocs profilés (3, 7a) ou d'autres profilés positifs (7b), les blocs profilés (3, 7a) ou les profilés positifs (7b) étant à chaque fois pourvus d'une pluralité d'entailles (11, 12) s'étendant au moins essentiellement dans la direction transversale de la bande de roulement et ayant une largeur de 0,4 mm à 0,6 mm, qui divisent les blocs d'épaulement (3) et les blocs profilés (3, 7a) ou d'autres profilés positifs (7b) en éléments de blocs (3a, 17a, 17b), qui forment des arêtes de prise vers la surface du profilé et qui s'étendent au moins en partie, en vue de dessus, en ligne droite ou essentiellement en ligne droite, et sont limitées dans ces parties par des parois d'entailles planes (16, 20) s'étendant dans la direction radiale, des entailles (11, 12) étant prévues, lesquelles présentent, au niveau de la paroi d'entaille plane (16, 20) s'étendant dans la direction radiale d'une partie s'étendant en ligne droite en vue de dessus, une saillie unique (19) avec une arête de prise supplémentaire (18) réalisée sur la saillie (19), dont la distance à la surface profilée - pour un pneu neuf - est comprise entre 1 mm et 2 mm,
**caractérisé en ce que**
la bande de roulement est réalisée de manière directionnelle, les saillies (19) étant disposées dans les blocs profilés d'épaulement (3) au niveau de parois d'entailles (16) qui se raccordent à des arêtes sortantes (14b) des éléments de blocs (3a), et les saillies (19) étant disposées dans des profilés positifs (7a, 7b) dans la région de la bande de roulement centrale (Z) au niveau de parois d'entailles (20) qui se raccordent à des arêtes d'entrée (15a) des éléments de profilés positifs (17a, 17b).

2. Pneu de véhicule selon la revendication 1, **caractérisé en ce que** la distance de l'arête de prise supplémentaire (18) à la paroi d'entaille (16, 20) est comprise entre 0,1 mm et 0,2 mm.

3. Pneu de véhicule selon la revendication 1 ou 2, **caractérisé en ce que** les saillies (19) sont prévues dans des entailles (11, 12) ou des portions d'entailles qui s'étendent au moins jusqu'à une profondeur de 70% de la profondeur de profilé.
